# EUROPEAN PATENT SPECIFICATION

(11) **EP 1 791 297 B1**
(45) Date of publication and mention of the grant of the patent: **30.06.2010**
(21) Application number: 06753078.2
(22) Date of filing: 30.06.2006
(51) Int. Cl.: H04W 60/00

(54) **A REGISTRATION/CANCEL METHOD AND A REGISTRATION/CANCEL SYSTEM**
EIN REGISTRIERUNGS-/LÖSCHUNGSVERFAHREN UND REGISTRIERUNGS-/LÖSCHUNGSSYSTEM
MÉTHODE D INSCRIPTION/ANNULATION ET SYSTÈME D INSCRIPTION/ANNULATION

(30) Priority: 19.07.2005 CN 200510085028
(43) Date of publication of application: 30.05.2007
(73) Proprietor: Huawei Technologies Co., Ltd., Longgang District, Shenzhen Guangdong 518129 (CN)
(72) Inventor: YUAN, Lei, Shenzhen, Guangdong 518129 (CN)
(74) Representative: Epping - Hermann - Fischer
(86) International application number: PCT/CN2006/001518
(87) International publication number: WO 2007/009344

(56) References cited:
- EP-A- 1 253 766
- CN-A- 1 543 167
- CN-A- 1 617 498
- US-A1- 2003 169 695
- US-A1- 2004 236 633

## Description

### Field of the Invention

The present invention relates to network communication technology, in particular, to register/unregister system and method and client end as well as service management server thereof.

### Background of the Invention

In modern communication systems, such as in NGN (Next Generation Network), a lot of new services come into sight end to end and bring about an abundance of experiences to the users. As a result, users may need to apply for a plurality of services quite possibly to enjoy them. However, in the prior art such as SIP (Session Initiation Protocol) of NGN, in order to use a plurality of applied services, only one service may be registered/unregistered at a time. Therefore, in order to be able to enjoy a plurality of services, a user has to register/unregister each service needed one by one, which makes service-registering/unregistering a time-consuming task.

US Patent Application US2004/236633 A1 discloses a Registry, such as a UDDI registry, which dynamically manages answers to service queries by Service Consumers based at least on one or more of the individual states/status of Service Providers etc. The Registry may be configured to infer operational state/status about a Service Provider, and to remove providers from the registry if determined to be unavailable.

### Summary of the Invention

In view of the above disadvantages of the prior art, it is an object of the present invention to provide a register/unregister system and a register/unregister method, with which a plurality of services may be registered/unregistered at a time, so that registering/unregistering time may be saved.

The object of the present invention is achieved with the following solution. The invention embodiment provides a register/unregister system for registering/unregistering a plurality of services at a time, including a client end, a service management server and at least one service register/unregister server, wherein:
the service management server is capable of storing user information, which includes information of a plurality of services, and capable of extracting information of the plurality of services corresponding to a user and sending a message to the client end comprising the information of the plurality of services;
the client end is capable of delivering a service request message to the service management server at a predetermined occasion, capable of generating, based on the message comprising the information of the plurality of services received from the service management server, a plurality of registering/unregistering service requests for the plurality of services, and capable of delivering the plurality of register/unregister service requests for the plurality of services to the at least one service register/unregister server; and
the the at least one service register/unregister server is capable of registering/unregistering the plurality of services based on the plurality of register/unregister service requests for the plurality of services.

According to an embodiment the client end further includes an encryption component, the encryption component is configured to encrypt the service request.

According to an embodiment the service management server further includes a decryption component, the decryption component is configured to decrypt the encrypted service request.

According to an embodiment the service management server further includes an authentication component, the authentication component is configured to authenticate the service request.

According to an embodiment the register/unregister system the client end is capable of delivering the plurality of register/unregister service requests for the plurality of services to the at least one service register/unregister servers based on predefined rules.

The invention embodiment further provides a register/unregister method for registering/unregistering a plurality of services at a time, which includes:
delivering, by a client end, a service request message to a service management server at a predetermined occasion; obtaining, by the service management server, information of a plurality of services corresponding to a user based on the service request and sending a message comprising the information of the plurality of services to the client end;
generating, by the client end, a plurality of register/unregister service requests for the plurality of services end based on the information of the plurality of services and delivering the plurality of register/unregister service requests for the plurality of services to the at least one service register/unregister server; and
registering/unregistering, by the at least one service register/unregister server, the plurality of services based on the plurality of register/unregister service requests for the plurality of services.

Before the step of delivering the service request to a service management server by a client end, the register/unregister method may further include: encrypting the service request via the client end. Then before the process of obtaining the information of a plurality of services via a service management server based on the register/unregister service request and sending the information of a plurality of services to the client end, the register/unregister method may further include: decrypting the encrypted service request via the service management server.

Before the process of obtaining the information of a plurality of services via a service management server based on the service request and sending the information of the plurality of services to the client end, the register/unregister method may further include:
authenticating the service request by the service management server.

The step of delivering the plurality of register/unregister service requests for the plurality of services to the at least one service register/unregister server of the register/unregister method may be performed based on predefined rules by the client end, here the predefined rules may further include random register/unregister or priority-based register/unregister.

The embodiments of the present invention further provide a client end for registering/unregistering a plurality of services at a time, including:
a component configured to:
   deliver a service request to a service management server at a predetermined occasion;
   receive a message from a service management server comprising information of a plurality of services corresponding to a user;
   generate, based on the information of the plurality of of services received from the service management server, a plurality of register/unregister service requests for the plurality of services; and
   deliver the plurality of register/unregister service requests for the plurality of services to at least one service register/unregister server.

According to an embodiment the component is further configured to encrypt the service request.

Furthermore, the component may be configured to obtain predefined rules, and the client end delivers the plurality of register/unregister service requests for the plurality of services to the at least one service register/unregister server based on the predefined rules.

According to the invention, a plurality of services may be registered/unregistered at a time, so that users need not to register/unregister each service one by one after applying for the plurality of services. As a result, time can be saved and good experience will be brought to the users.

### Brief Description of the Drawings

Fig.1 is a schematic diagram of the register/unregister system according to an embodiment of the present invention;
Fig.2 shows a flow chart of the register/unregister method according to an embodiment of the present invention;
Fig.3 shows a register method according to an embodiment of the present invention; and
Fig.4 shows an unregister method according to an embodiment of the present invention.

### Detailed Description of the Embodiments

In order to better understand and implement the present invention, embodiments of the invention will now be described with reference to the accompanying drawings.

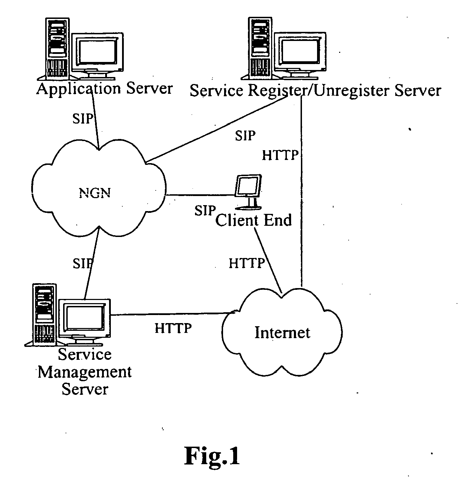

An embodiment of the present invention provides a register/unregister system as shown in Fig.1, which includes: a communication network, a client end, a service management server, a service register/unregister server and an application server. Hereinbelow, this register/unregister system will be described in detail.

The communication network includes a NGN and/or the Internet, for connecting the client end, application server, service register/unregister server and service management server, which enables the communication therebetween. When the above mentioned devices are connected via an NGN, SIP may be used for communication; when they are connected via the Internet, HTTP (Hypertext Transfer Protocol) may be used for communication.

The client end is connected with the service management server via a communication network to generate service request message, deliver the generated service request message to the service management server and deliver register/unregister service request of each service to the service register/unregister server based on predefined rules and the register/unregister information of each service returned by the service management server. The service request message includes a user name and a user password. The client end includes an encryption component, the encryption component is configured to encrypt the service request message and/or the register/unregister service request.

The service management server is used to store user information. The user information includes a user name, a user password and information of each service corresponding to the user. The service information includes a service account, a service password, a service register/unregister server address, information of register mode and encryption mode, etc. The service management server further comprises: a decryption component, the decryption component is configured to decrypt the encrypted service request message; an authentication component, the authentication component is configured to authenticate the service request message based on the user information.
The service register/unregister server is used to register/unregister each service based on the register/unregister service request of each service and can determine whether to permit a user to use the applied service according to the register situation of the user. The service register/unregister server may be an application server (AS), a Soft Exchange Server or other servers in its physical embodiment.

The application server is used to execute various services.

The invention further provides a register/unregister method by which a plurality of services may be registered/unregistered at a time. The register/unregister method will now be described in detail in the following.

First of all, a user may activate a plurality of services in a business hall or via communication network and obtain relevant service information, then store the service information into a table of user information on a service management server.

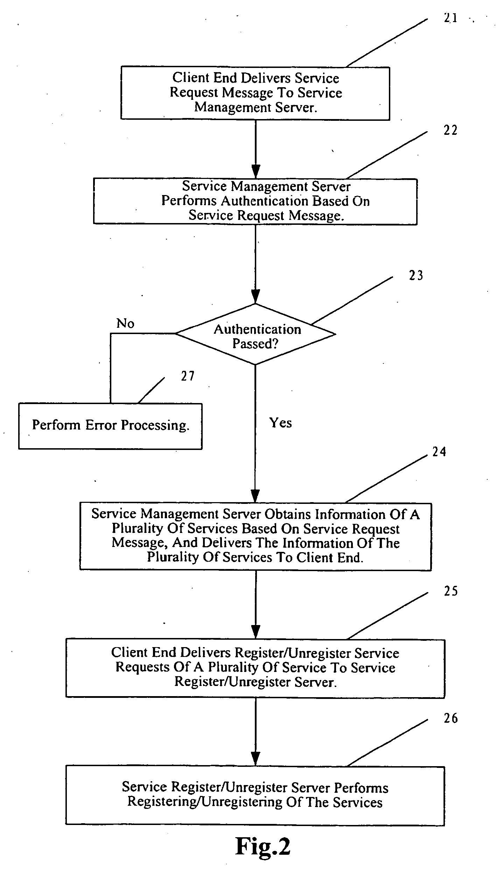

As shown in Fig.2, in Step 21, a client end delivers service request message to a service management server. The service request message includes a user name and a user password. In order to ensure the security of the user information, it may be encrypted on the client end. For example, DES (Data Encryption Standard) and the like may be used to encrypt the service request message.

The client end may deliver service request message to the service management server at various occasions. For example, service request message may be delivered after the client end receives a user register/unregister request, at a preset time or at fixed time intervals.

The client end may deliver service request message to the service management server in various ways. For example, service request message may be delivered to the service management server in HTTP and the like via Internet, or in SIP and the like via NGN.

In Step 22, the service management server decrypts the encrypted service request message at first, and then authenticates the service request message based on the user information, i.e., verifies whether the user name is consistent with the user password. If the user name is consistent with the user password, then the authentication will be passed; otherwise, it fails.

In Step 23, determine whether the authentication has been passed. If yes, then go to Step 24; otherwise, turn to Step 27.

In Step 24, after the authentication has been passed, the service management server extracts the service information of the user and delivers the service information to the client end. The service information includes the information of a plurality of services.

In Step 25, the client end generates register/unregister service requests of a plurality of services based on the service information delivered by the service management server and delivers the register/unregister service requests of the services to a service register/unregister server based on predefined rules.

In Step 26, the service register/unregister server performs registering/unregistering of a service based on the register/unregister service request of the service.

In Step 27, error processing is performed. The client end may be prompted that the user name is inconsistent with the password, and the user may be required to resubmit the service request message and perform Step 21 to 23 again until the authentication is passed, or if the authentication has not been passed after predetermined submission times (for example, 5 times), the register/unregister request of the user can be rejected. In the invention, if the authentication is not passed after the register/unregister request has been submitted 5 times, then the register/unregister request of the user will be rejected and the user will be prompted to reset user password in the business hall carrying with his/her valid certificate.

The predefined rules refer to register/unregister order. For example, register/unregister may be applied for in the service register/unregister server one by one in a predetermined priority order or randomly.

In order to make the user aware of the register/unregister status, the client end may return a successful register/unregister message to the user after all of the services have been registered/unregistered, or may return a successful register/unregister message to the user after a key service register/unregister is completed, so that the user may know that whether certain service has been successfully registered/unregistered or not.

The register/unregister mode of each service may be determined when the service is applied for and be configured when the service is distributed. The service register/unregister mode may be configured as a standard SIP register/unregister process, a network station HTTP/HTTPS register/unregister process or any customized register/unregister process according to the different modes applied.

It should be noted that the service register/unregister servers corresponding to each service may be different or be the same with each other.

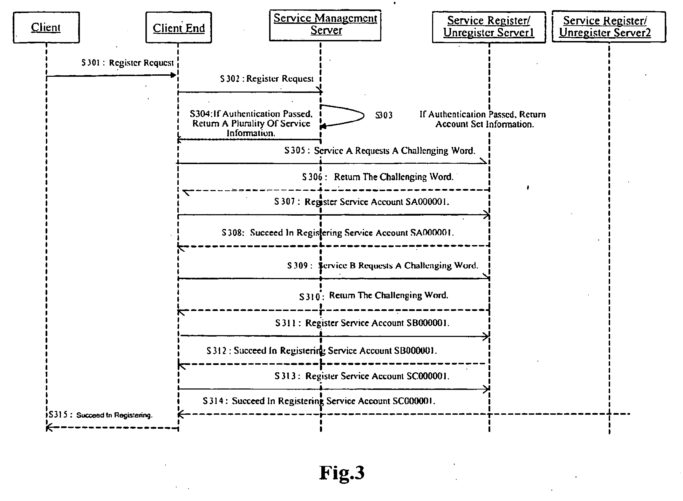

As shown in Fig.3, a process for registering a plurality of services at a time will now be illustrated, taking NGN service as an example. It is assumed that there exists a user in a NGN with a user name of Ray and a user password of RayPwd, who has applied to activate three NGN services: service A, service B and service C, the client end address is Ray@192.0.2.4, and the information of the service register/unregister server is shown in Table 1.

**Table 1: Information Table Of The Service Register/Unregister Server**

| Server Name | Server Address | Server Type | Notes |
|---|---|---|---|
| AMS1 | www.AMS1.com:8001/regis trar.do | Account Management Server | Service Management Server |
| ARS1 | ARS1.com:5060 | Account Registration Server | Service Register/Unregister Server |
| ARS2 | www.ARS2.com:8002/regis trar.do | Account Registration Server | Service Register/Unregister Server |

Table 2 shows the user information.

**Table 2: Table of User Information**

| User Name | User Password | Client End Address | Notes |
|---|---|---|---|
| Ray | RayPwd | Ray@192.0.2.4 | |

Table 3 shows the information of the services.

**Table 3: Table Of User Service Information**

| User | Ray | Ray | Ray |
|---|---|---|---|
| Service | Service A | Service B | Service C |
| Service Account | SA000001 | SB000001 | SC000001 |
| Service Account Password | SA000001Pwd | SB000001Pwd | SC000001Pwd |
| Service Register/Unregister Server | ARS1 | ARS1 | ARS2 |
| Register Mode | Standard SIP Register | Standard SIP Register | HTTP Register |
| Register Encryption | MD5 | MD5 | Not Encrypted |
| Register Priority | High | Medium | Low |
| Must Be Registered | Yes | Yes | Yes |
| Unregister Priority | High | Medium | Low |
| Must Be Unregistered | Yes | Yes | Yes |
| Notes | | | |

In Step 301, the user Ray inputs user name Ray and password RayPwd via client end interface, then clicks a button to submit the service request message;
In Step 302, the client end encapsulates the information, such as user name Ray and password RayPwd, into a packet and sends it to AMS1. In order to ensure the security of the user information, the user information, such as user name and password, may be encrypted, and then the encrypted user information will be sent to AMS1. The following is an exemplary message of service request message sent from a client end to AMS1.
S2 REGISTER Client ->AMS1, the exemplary message is as follows:
POST http://www.AMS1.com:8001/registrar.do HTTP/1.1
Content-Type: application/x-www-form-urlencoded
Accept-Encoding: gzip, deflate
Content-Length: 40
Connection: Keep-Alive
Cache-Control: no-cache
name=*Ray*&password=*RayPwd*&clientaddr=Ray@192.0.2.4&method=login &submit=submit

In Step 303, after AMS1 receives the HTTP packet from the client end, it will resolve the packet and obtain the user name and the password. If the packet has been encrypted, a decryption operation will be required. Then, AMS1 will perform authentication by verifying the user name and password sent by the client end with the user information stored on AMS1 (See Table 2: Table Of User Information). In Step 304, if the authentication is passed, then the service management server extracts the service information corresponding to the user stored thereon (See Table 3: Table Of User Service Information); then the service management server delivers the service information corresponding to the user to the client end; S4 200 OK AMS1->Client, an exemplary message is as follows:

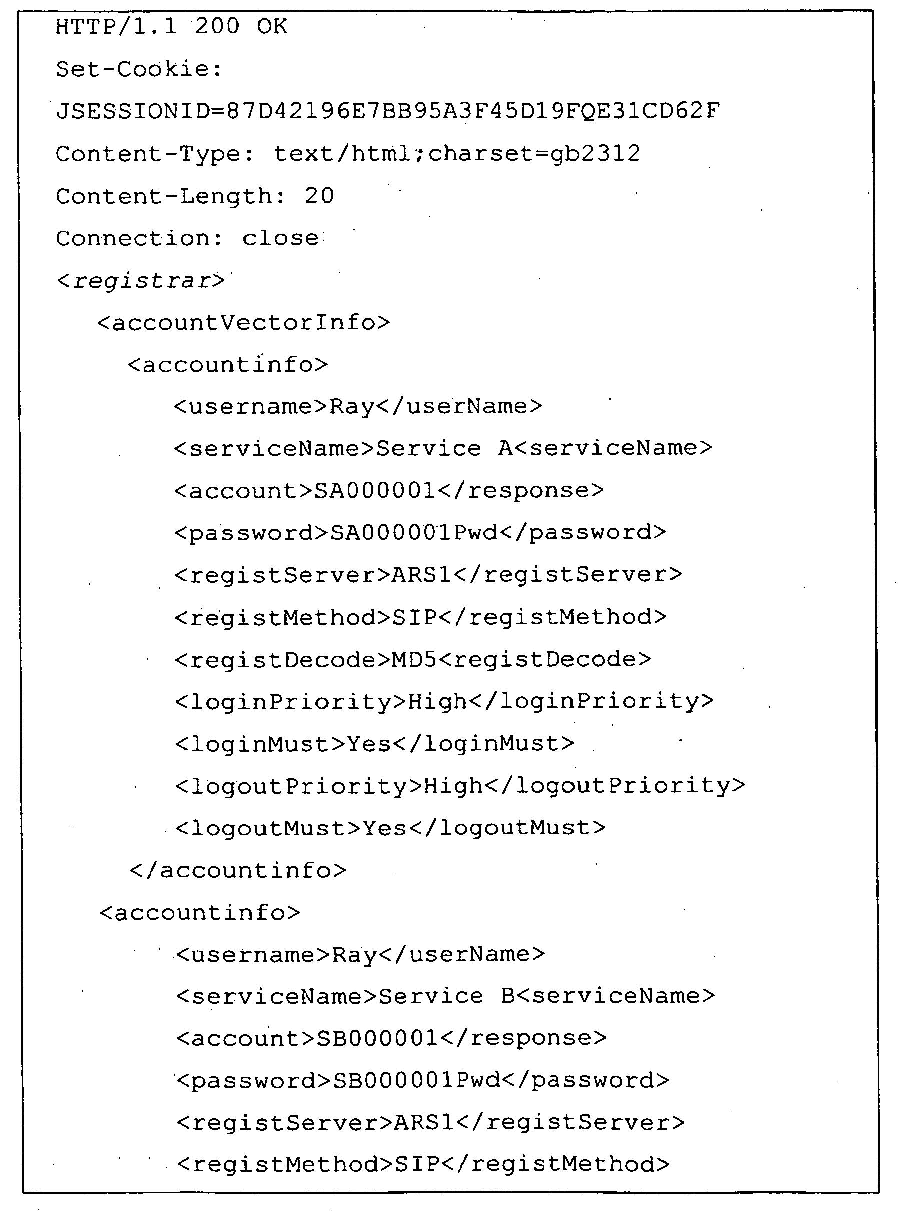

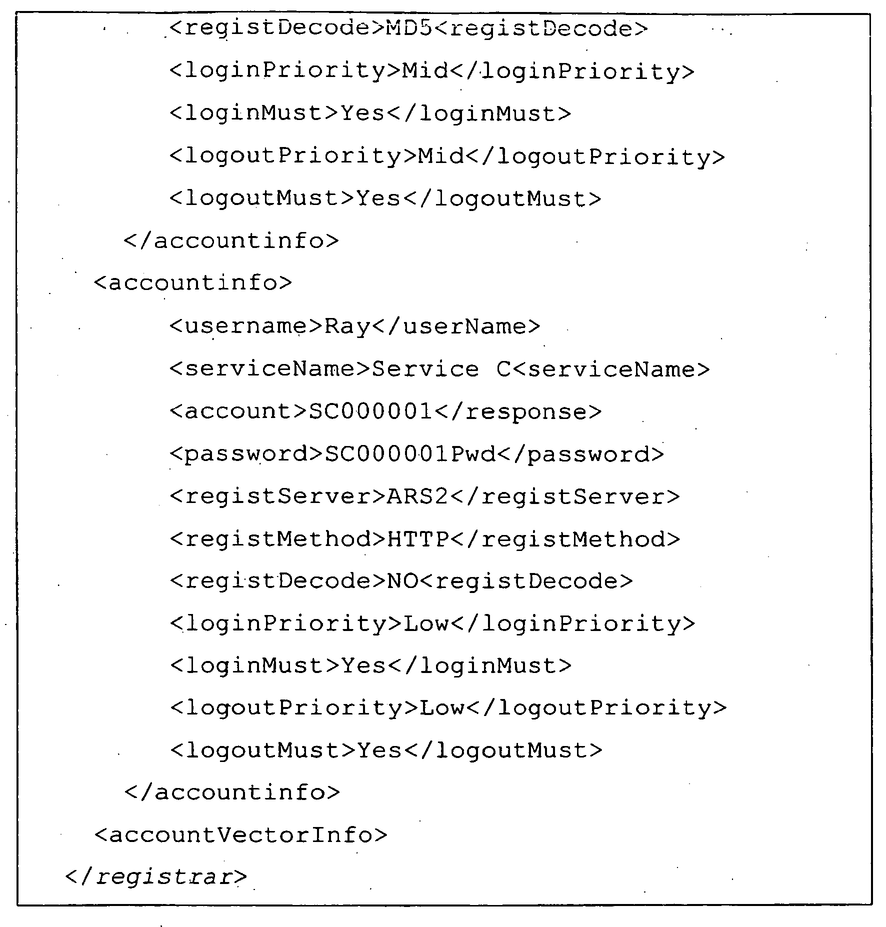

The client end will register all of the services based on the service information according to the predefined priority. Service A has the highest priority, so it will be processed firstly.
In Step 305, since the register mode of service A is a standard SIP mode, the client end will request a challenging word from ARS1, so that the client end may encrypt the register request of service A according to the challenging word. The challenging word acts as a key. In Step 306, ARS1 delivers a challenging word to the client end. In Step 307, the client end encrypts the register request information of service A based on the challenging word and then delivers it to ASR1. That is, AMS1 cooperates with ARS1 to complete the register of service A. The following is an example of the messages of the register process of service A.

S5 REGISTER Client->ARS1, an exemplary message is as follows:

| |
|---|
| REGISTER sip: *ARS1.com* SIP/2.0 |
| Via: SIP/2.0/UDP temp.ARS1.com:5080 |
| Max-Forwards: 70 |
| To: Ray<sip:Ray@*ARS1.com*>; |
| From: Ray<sip:Ray@*ARS1.com*>;tag=456248 |
| Call-ID: 843817637684230@temp.ARS1.com |
| CSeq: 1 REGISTER |
| Contact: <sip:Ray@192.0.2.4> |
| User-Agent: Service A/1.0 |
| Expires: 72000 |
| Content-Length: 0 |

S6 401 with Authorization ARS1->Client, an exemplary information is as follows:

| |
|---|
| SIP/2.0 401 Unauthorized |
| Allow: INVITE,ACK,BYE,CANCEL,OPTIONS,REGISTER |
| Via: SIP/2.0/UDP temp.ARS1.com:5080 |
| To: Ray<sip:Ray@*ARS1.com*>;tag=2493k59kd |
| From: Ray<sip:Ray@*ARS1.com*>;tag=456248 |
| Call-ID: 843817637684230@temp.ARS1.com |
| CSeq: 1 REGISTER |
| Contact: <sip:*ARS1.com*> |
| Expires: 72000 |
| Content-Length: 0 |
| www-Authenticate: Digest |
| qop="auth",nonce="BJbQ.001",algorithm="md5",realm="*ARS1.co m"* |

S7 REGISTER Client->ARS1, an exemplary message is as follows:

| |
|---|
| REGISTER sip: *ARs1.com* SIP/2.0 |
| Via: SIP/2.0/UDP temp.ARS1.com:5080 |
| Max-Forwards: 70 |
| To: Ray<sip:Ray@*ARS1.com*>;tag=2493k59kd |
| From: Ray<sip:Ray@*ARS1.com*>;tag=456248 |
| Call-ID: 843817637684230@temp.ARS1.com |
| CSeq: 2 REGISTER |
| Contact: <sip:Ray@192.0.2.4> |
| User-Agent: Service A/1.0 |
| Expires: 72000 |
| Content-Length: 0 |
| Authorization: Digest algorithm="md5", |
| cnonce="51f308670-0972-809d-3409a-4a091d1d09", |
| nc=00000001,nonce="BJbQ.001",qop="auth",realm="*ARS1.com*", |
| response="1ac17228a5e400a99f378eeedf87aa2c", |
| uri="sip:*ARS1.com*",username=SA000001@*ARS1.com* |

S8 200 OK ARS1->Client, an exemplary information is as follows:

| |
|---|
| SIP/2.0 200 OK |
| Allow: INVITE, ACK, BYE, CANCEL, OPTIONS, REGISTER, |
| SUBSCRIBE, NOTIFY, INFO |
| Via: SIP/2.0/UDP temp.ARS1.com:5080 |
| To: Ray<sip:Ray@*ARS1.com*>;tag=2493k59kd |
| From: Ray<sip:Ray@*ARS1.com*>;tag=456248 |
| Call-ID: 843817637684230@temp.ARS1.com |
| CSeq: 2 REGISTER |
| Contact: <sip:*ARS1.com*> |
| User-Agent: Service A/1.0 |
| Expires: 72000 |
| Content-Length: 0 |

In Step 308, after the register of service A is completed, ARS1 returns a successful register information or failed register information to the client end according to the register status of service A.
Since service B has a relatively higher priority, so it should now be processed.

In Step 309, since the register mode of service B is a standard SIP mode, the client end will request a challenging word from ARS1, so that the client end may encrypt the register request of service B according to the challenging word. The challenging word acts as a key. In Step 310, ARS1 delivers a challenging word to the client end. In Step 311, the client end encrypts the register request information of service B according to the challenging word and then delivers it to ASR1. The following is an example of the messages of the register process of service B.

S9 REGISTER Client->ARS1, an exemplary message is as follows:

| |
|---|
| REGISTER sip: *ARS1.com* SIP/2.0 |
| Via: SIP/2.0/UDP temp.ARS1.com:5080 |
| Max-Forwards: 70 |
| To: Ray<sip:Ray@*ARS1.com*>; |
| From: Ray<sip:Ray@*ARS1.com*>;tag=456248 |
| Call-ID: 843817637684230@temp.ARS1.com |
| CSeq: 1 REGISTER |
| Contact: <sip:Ray@192.0.2.4> |
| User-Agent: Service B/1.0 |
| Expires: 72000 |
| Content-Length: 0 |

S10 401 with Authorization ARS1-> Client, an exemplary information is as follows:

| |
|---|
| SIP/2.0 401 Unauthorized |
| Allow: INVITE,ACK,BYE,CANCEL,OPTIONS,REGISTER |
| Via: SIP/2.0/UDP temp.ARS1.com:5080 |
| To: Ray<sip:Ray@*ARS1.com*>;tag=2493k59kd |
| From: Ray<sip:Ray@*ARS1.com*>;tag=456248 |
| Call-ID: 843817637684230@temp.ARS1.com |
| CSeq: 1 REGISTER |
| Contact: <sip:*ARS1.com*> |
| Expires: 72000 |
| Content-Length: 0 |
| www-Authenticate: Digest |
| qop="auth",nonce="BJbQ.001",algorithm="md5",realm="*ARS1.co m"* |

S11 REGISTER Client ->ARS1, an exemplary message is as follows:

| |
|---|
| REGISTER sip: *ARS1.com* SIP/2.0 |
| Via: SIP/2.0/UDP temp.ARS1.com:5080 |
| Max-Forwards: 70 |
| To: Ray<sip:Ray@*ARS1.com*>;tag=2493k59kd |
| From: Ray<sip:Ray@*ARS1.com*>;tag=456248 |
| Call-ID: 843817637684230@temp.ARS1.com |
| CSeq: 2 REGISTER |
| Contact: <sip:Ray@192.0.2.4> |
| User-Agent: Service B/1.0 |
| Expires: 72000 |
| Content-Length: 0 |
| Authorization: Digest algorithm="md5", |
| cnonce="51f308670-0972-809d-3409a-4a091d1d09", |
| nc=00000001,nonce="BJbQ.001",qop="auth",realm="*ARS1.com*", |
| response="1ac17228a5e400a99f378eeedf87aa2c", |
| uri="sip:*ARS1.com*",username=SB000001@ARS1.com |

S12 200 OK ARS1-> Client, an exemplary information is as follows:

| |
|---|
| SIP/2.0 200 OK |
| Allow: INVITE, ACK, BYE, CANCEL, OPTIONS, REGISTER, |
| SUBSCRIBE, NOTIFY, INFO |
| Via: SIP/2.0/UDP temp.ARS1.com:5080 |
| To: Ray<sip:Ray@*ARS1.com*>;tag=2493k59kd |
| From: Ray<sip:Ray@*ARS1.com*>;tag=456248 |
| Call-ID: 843817637684230@temp.ARS1.com |
| CSeq: 2 REGISTER |
| Contact: <sip:*ARS1.com*> |
| User-Agent: Service B/1.0 |
| Expires: 72000 |
| Content-Length: 0 |

In Step 312, after the register of service B is completed, ARS1 returns a successful register information or failed register information to the client end according to the register status of service B.
Now, only service C is left, which will be processed by the client end.
In Step 313, since the register mode of service C is HTTP mode, the client end will deliver the register request information of the service to ASR2. In Step 314, after the register of service C is completed, ARS2 returns a successful register information or failed register information to the client end according to the register status of service C. The following is an exemple of the messages of the register process of service C.

S13 REGISTER Client ->ARS2, an exemplary message is as follows:

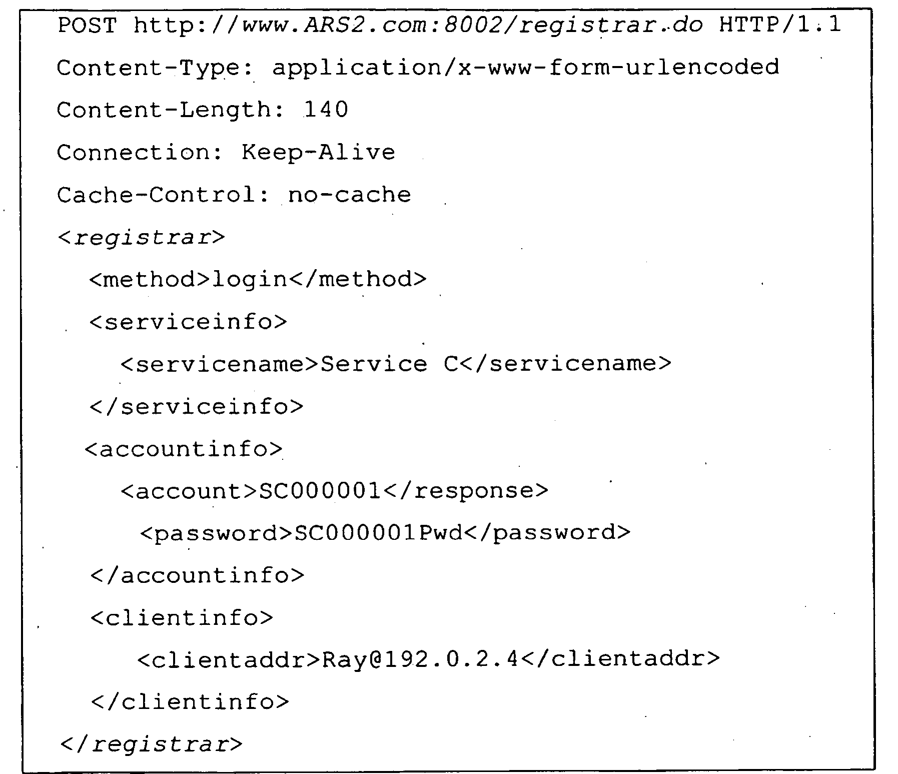

S14 200OK ARS2-> Client, an exemplary message is as follows:

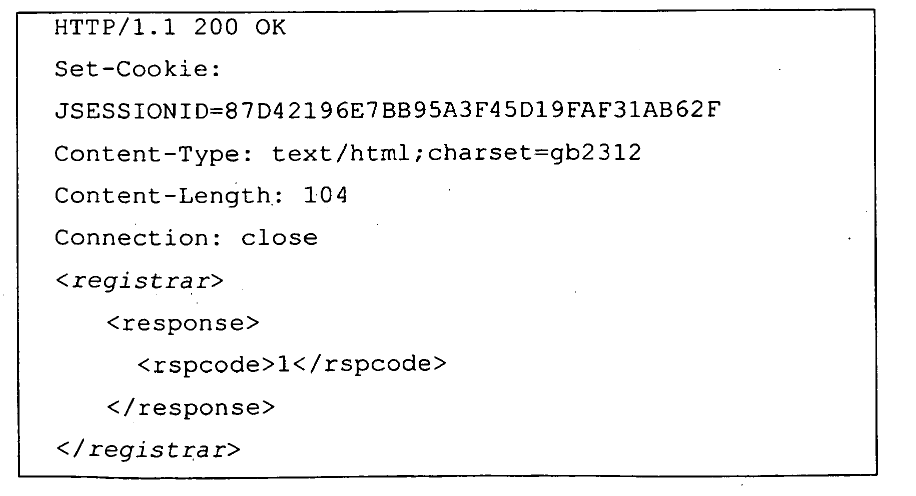

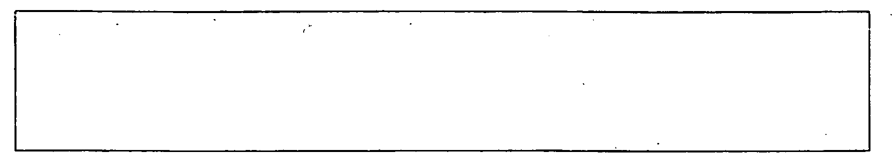

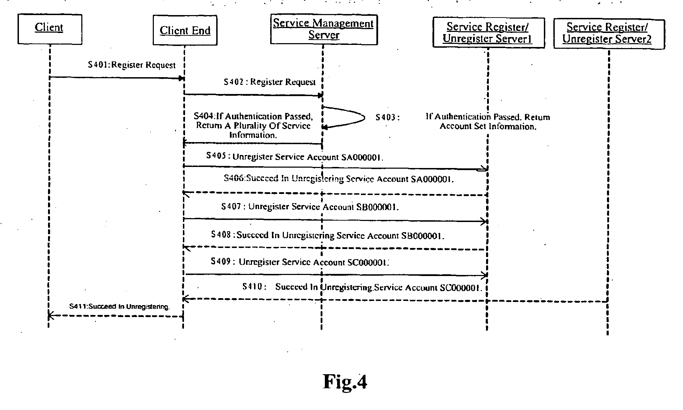

In Step 315, since all of the three services corresponding to the user must be registered, if all of the services are registered successfully, then successful register information will be returned; otherwise, failed register information will be returned.
As shown in Fig.4, an unregister process will be described in the following.

In Step 401, the user Ray inputs user name Ray and password RayPwd via client end interface, then clicks a button to submit the service request message;
In Step 402, the client end encapsulates the information, such as user name Ray and password RayPwd, into a packet and sends it to AMS1. In order to ensure the security of the user information, the user information, such as user name and password, may be encrypted firstly, and then the encrypted user information will be sent to AMS1. The following is an exemplary message of service request message sent from a client end to AMS1.

S2 REGISTER Client->AMS1, an exemplary message is as follows:

| |
|---|
| POST http://www.AMS1.com:8001/registrar.do HTTP/1.1 |
| Content-Type: application/x-www-form-urlencoded |
| Accept-Encoding: gzip, deflate |
| User-Agent: Mozilla/4.0 (compatible; MSIE 6.0; Windows NT 5.1) |
| Content-Length: 40 |
| Connection: Keep-Alive |
| Cache-Control: no-cache |
| Cookie: JSESSIONID=87D42196E7BB95A3F45D19FQE31CD62F |
| name=Ray&passviord=*RayPwd&*clientaddr=Ray@192.0.2.4&method=logout &submit=submit |

In Step 403, after receiving a HTTP packet sent by a client end, AMS1 will resolve the packet and obtain a user name and a password. If the packet has been encrypted, then a decryption operation will be required. Then, AMS1 performs authentication by verifying the user name and password sent by the client end with the user information stored on AMS1 (See Table 2: Table Of User Information).

In Step 404, if the authentication is passed, then the service management server extracts the service information corresponding to the user stored thereon (See Table 3: Table Of User Service Information); then the service management server delivers the service information corresponding to the user to the client end;
S4 200 OK AMS1->Client, an exemplary message is as follows:

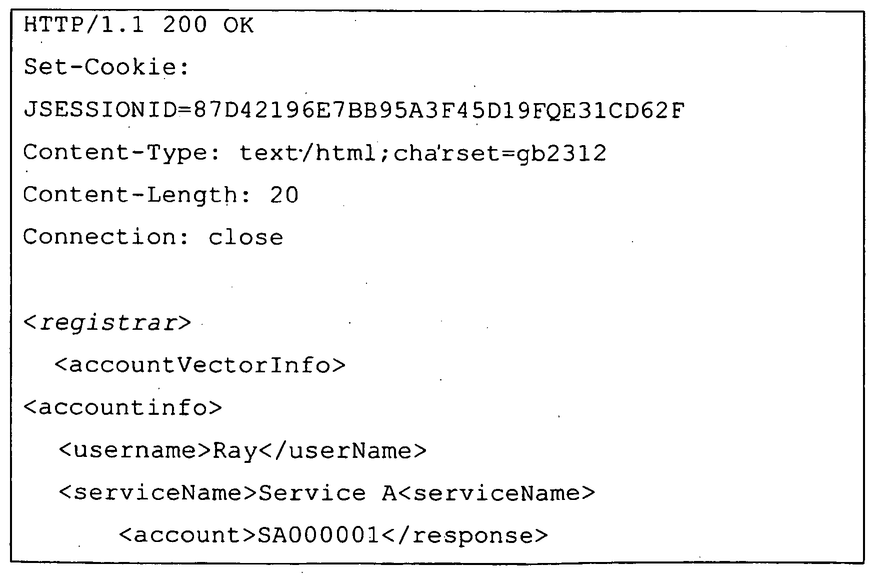

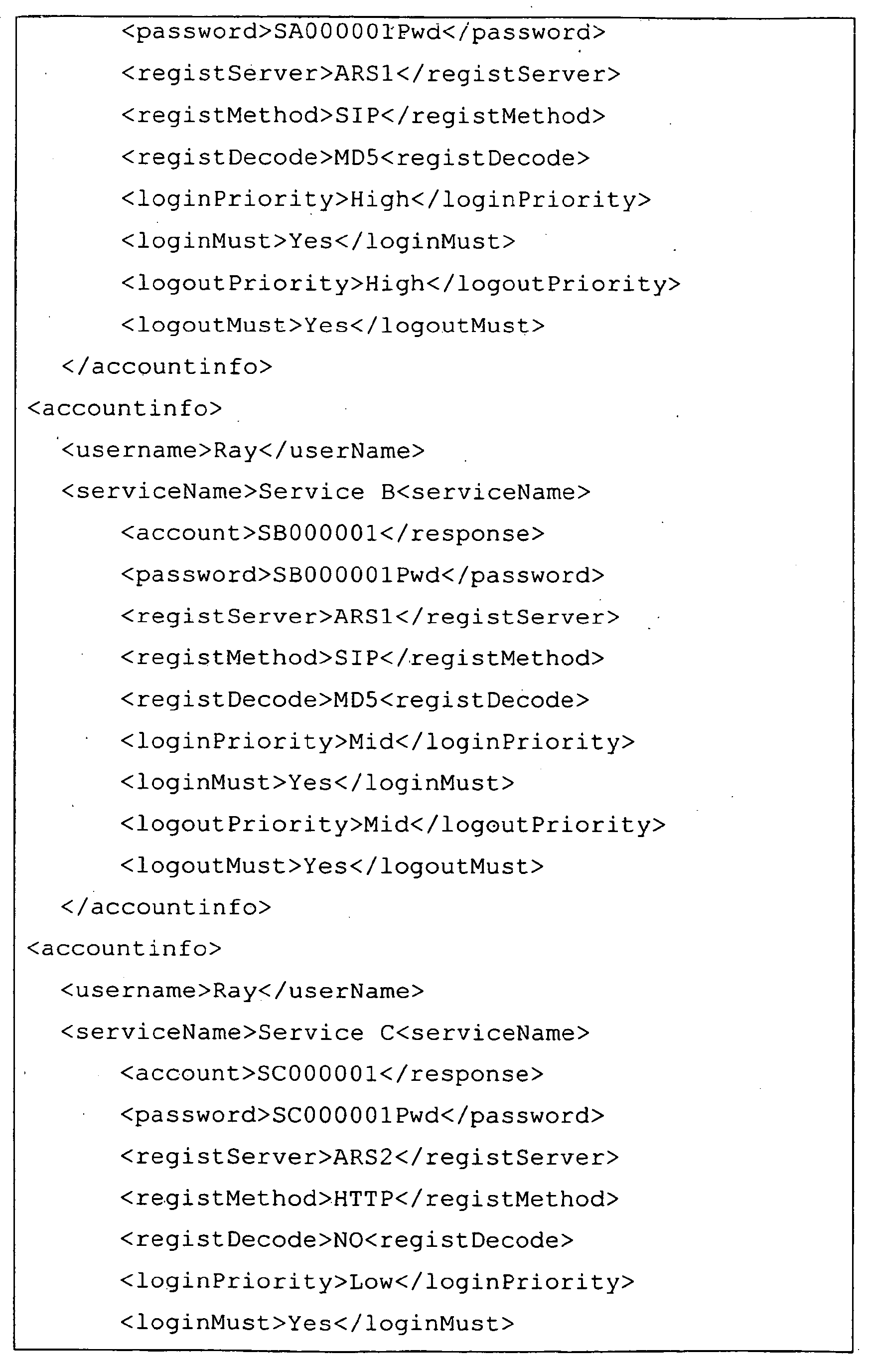

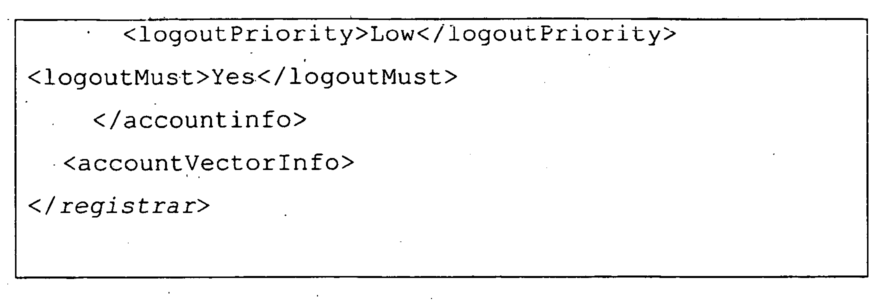

The client end will unregister all of the services based on the service information according to the predefined priority. Since service A has the highest priority, so it will be processed firstly.

In Step 405, the client end delivers an unregister request of service A to ARS1.The only difference between the unregister request message and the register request message delivered by the client end lies in that the value of the Expires field of the unregister request message is 0.

In Step 406, after the unregister of service A is completed, ARS1 returns a successful unregister information or failed unregister information to the client end according to the unregister status of service A.
S4 REGISTER Client->ARS1, an exemplary message is as follows:

| |
|---|
| REGISTER sip: *ARS1.com* SIP/2.0 |
| Via: SIP/2.0/UDP temp.ARS1.com:5080 |
| Max-Forwards: 70 |
| To: Ray<sip:Ray@*ARS1.com*>; |
| From: Ray<sip:Ray@*ARS1.com*>;tag=456248 |
| Call-ID: 843817637684230@temp.ARS1.com |
| CSeq: 3 REGISTER |
| Contact: <sip:Ray@192.0.2.4> |
| User-Agent: Service A/1.0 |
| Expires: 0 |
| Content-Length: 0 |

S5 200 OK ARS1->Client, an exemplary information is as follows:

| |
|---|
| SIP/2.0 200 OK |
| Allow: INVITE, ACK, BYE, CANCEL, OPTIONS, REGISTER |
| Via: SIP/2.0/UDP temp.ARS1.com:5080 |
| To: Ray<sip:Ray@*ARS1.com*> |
| From: Ray<sip:Ray@*ARS1.com*>;tag=456248 |
| Call-ID: 843817637684230@temp.ARS1.com |
| CSeq: 3 REGISTER |
| Contact: <sip:*ARS1.com*> |
| User-Agent: Service A/1.0 |
| Expires: 0 |
| Content-Length: 0 |

Since service B has a relatively higher priority, so it should now be processed.

In Step 407, the client end delivers an unregister request of service B to ARS1.The only difference between the unregister request message and the register request message delivered by the client end lies in that the value of the Expires field of the unregister request message is 0.

In Step 408, after the unregister of service B is completed, ARS1 returns a successful unregister information or failed unregister information to the client end according to the unregister status of service B.
S6 REGISTER Client->ARS1, an exemplary message is as follows:

| |
|---|
| REGISTER sip: *ARS1.com* SIP/2.0 |
| Via: SIP/2.0/UDP temp.ARS1.com:5080 |
| Max-Forwards: 70 |
| To: Ray<sip:Ray@*ARS1.com*>; |
| From: Ray<sip:Ray@*ARS1.com*>;tag=456248 |
| Call-ID: 843817637684230@temp.ARS1.com |
| CSeq: 3 REGISTER |
| Contact: <sip:Ray@192.0.2.4> |
| User-Agent: Service A/1.0 |
| Expires: 0 |
| Content-Length: 0 |

S7 200 OK ARS1->Client, an exemplary information is as follows:

| |
|---|
| SIP/2.0 200 OK |
| Allow: INVITE, ACK, BYE, CANCEL, OPTIONS, REGISTER |
| Via: SIP/2.0/UDP temp.ARS1.com:5080 |
| To: Ray<sip:Ray@*ARS1.com*> |
| From: Ray<sip:Ray@*ARS1.com*>;tag=456248 |
| Call-ID: 843817637684230@temp.ARS1.com |
| CSeq: 3 REGISTER |
| Contact: <sip:*ARS1.com*> |
| User-Agent: Service A/1.0 |
| Expires: 0 |
| Content-Length: 0 |

Finally, service C will be processed.

In Step 409, the client end delivers an unregister request to ARS2. In Step 410, after the unregister of service C is completed, ARS2 returns a successful unregister information or failed unregister information to the client end according to the unregister status of service C. S8 REGISTER Client->ARS2, an exemplary message is as follows:

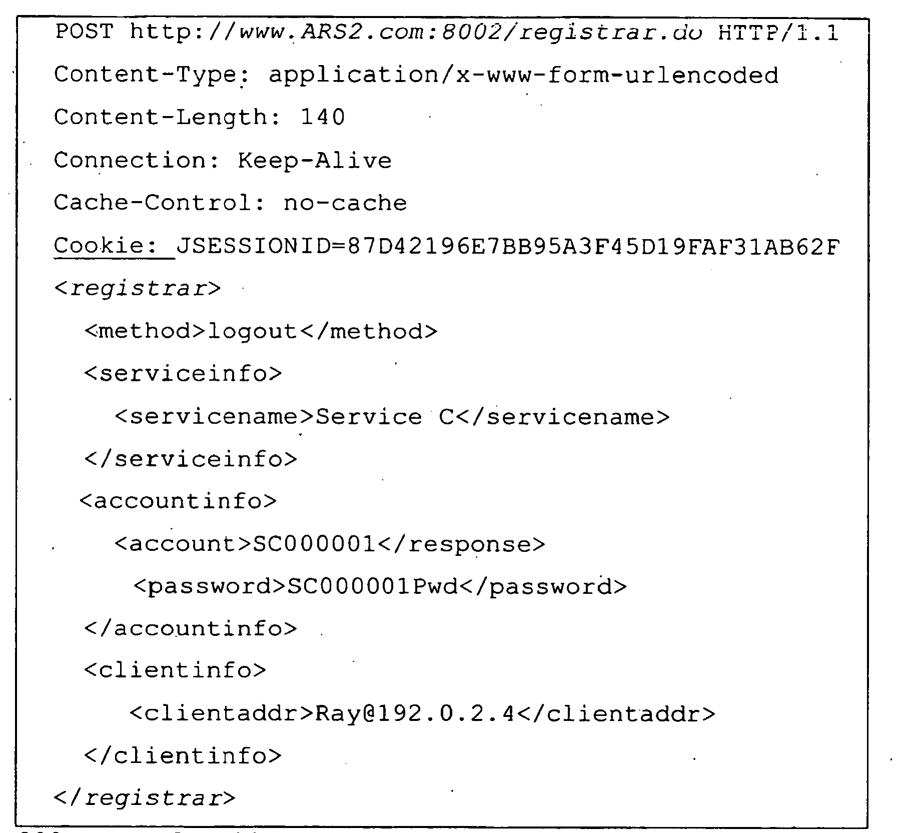

S9 200 OK ARS2->Client, an exemplary message is as follows:

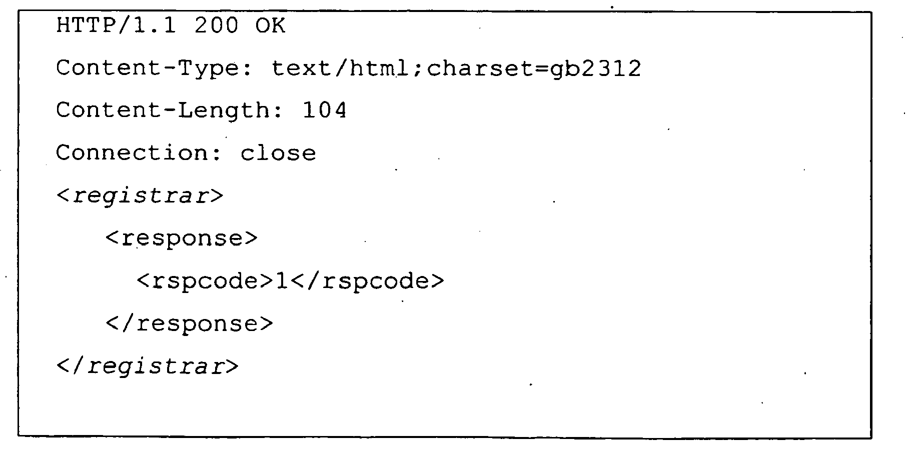

In Step 411, since all of the three services corresponding to the user must be unregistered, so if all of the services are unregistered successfully, then a successful unregister information will be returned; otherwise, a failed unregister information will be returned.

It should be noted that in the user information of a service management server, each service may correspond to one and the same user name and user password, or it may correspond to different user names and user passwords. In the latter case, the service request message delivered to the service management server by a client end should include the user name and the user password corresponding to each service.

According to the invention, a plurality of services may be registered/unregistered at a time, so that users need not to register/unregister each service one by one after applying for a plurality of services. As a result, time can be saved and good experience will be brought to the users, which is beneficial for service integration.

Although the present invention has been described with the above embodiments, however, additional advantages and modifications will readily occur to those skilled in the art, without departing from the scope of the invention. The scope of the present invention should be defined by the appended claims and their equivalents.

## Claims

1. A register/unregister system for registering/unregistering a plurality of services at a time, comprising a client end, a service management server and at least one service register/unregister server, wherein : the service management server is capable of storing user information, which includes information of a plurality of services, is capable of extracting information of the plurality of services corresponding to a user based on a service request delivered by the client end, and is capable of sending a message to the client end comprising the information of the plurality of services ;
the client end is capable of delivering a service request to the service management server at a predetermined occasion, is capable of generating, based on the message comprising the information of the plurality of services received from the service management server, a plurality of register/unregister service requests for the plurality of services, and is capable of delivering the plurality of register/unregister service requests for the plurality of services to the at least one service register/unregister server; and
the at least one service register/unregister server is capable of registering/unregistering the plurality of services based on the plurality of register/unregister service requests for the plurality of services.

2. The register/unregister system according to claim 1, wherein the client end further comprises an encryption component, the encryption component being configured to encrypt the service request.

3. The register/unregister system according to claim 2, wherein the service management server further comprises a decryption component, the decryption component being configured to decrypt the encrypted service request.

4. The register/unregister system according to claim 1, wherein the service management server further comprises an authentication component, the authentication component being configured to authenticate the service request

5. The register/unregister system according to claim 1, wherein the client end is capable of delivering the plurality of register/unregister service requests for the plurality of services to the at least one service register/unregister server based on predefined rules.

6. A register/unregister method for registering/unregistering a plurality of services at a time, comprising:
delivering (21), by a client end, a service request to a service management server at a predetermined occasion;
obtaining (24), by the service management server, information of a plurality of services corresponding to a user based on the service request and sending a message comprising the information of the plurality of services to the client end;
generating, by the client end, a plurality of register/unregister service requests for the plurality of services based on the information of the plurality of services and delivering (25) the plurality of register/unregister service requests for the plurality of services to at least one service register/unregister server; and
registering/unregistering (26), by the at least one service register/unregister server, the plurality of services based on the plurality of register/unregister service requests for the plurality of services.

7. The register/unregister method according to claim 6, further comprising encrypting the service request.

8. The register/unregister method according to claim 7, further comprising decrypting the encrypted service request by the service management server.

9. The register/unregister method according to claim 6, further comprising authenticating (22) the service request by the service management server.

10. The register/unregister method according to claim 6, wherein the step of delivering the plurality of register/unregister service requests for the plurality of services to at least one service register/unregister server is performed based on predefined rules by the client end.

11. The register/unregister method according to claim 10, wherein the predefined rules comprise random register/unregister or priority-based register/unregister.

12. A client end for registering/unregistering a plurality of services at a time, comprising:
a component configured to:
deliver a service request to a service management server at a predetermined occasion;
receive a message from the service management server comprising information of a plurality of services corresponding to a user; generate, based on the information of the plurality of services received from the service management server, a plurality of register/unregister service requests for the plurality of services; and
deliver the plurality of register/unregister service requests for the plurality of services to at least one service register/unregister server.

13. The client end according to claim 12, wherein the component is further configured to encrypt the service request.

14. The client end according to claim 12, wherein the component is further configured to obtain predefined rules, and to deliver the plurality of register/unregister service requests for the plurality of services to the at least one service register/unregister server based on the predefined rules.

## Patentansprüche

1. Registrier-/Entregistriersystem zum Registrieren/Entregistrieren mehrerer Dienste auf einmal, umfassend ein Client-Ende, einen Dienstverwaltungsserver und mindestens einen Dienstregistrier-/-entregistrierserver, wobei
der Dienstverwaltungsserver Benutzerinformationen speichern kann, die Informationen mehrerer Dienste umfassen, Informationen der mehreren Dienste, die einem Benutzer entsprechen, auf der Basis einer durch das Client-Ende abgelieferten Dienstanforderung extrahieren kann und eine Nachricht zu dem Client-Ende senden kann, die die Informationen der mehreren Dienste umfasst;
das Client-Ende eine Dienstanforderung bei einer vorbestimmten Gelegenheit an den Dienstverwaltungsserver abliefern kann, auf der Basis der von dem Dienstverwaltungsserver empfangenen die Informationen der mehreren Dienste umfassenden Nachricht mehrere Registrier-/Entregistrierdienstanforderungen für die mehreren Dienste erzeugen kann und die mehreren Registrier-/Entregistrierdienstanforderungen für die mehreren Dienste an den mindestens einen Dienstregistrier-/-entregistrierserver abliefern kann; und
der mindestens eine Dienstregistrier-/-entregistrierserver die mehreren Dienste auf der Basis der mehreren Registrier-/Entregistrierdienstanforderungen für die mehreren Dienste registrieren/entregistrieren kann.

2. Registrier-/Entregistriersystem nach Anspruch 1, wobei das Client-Ende ferner eine Verschlüsselungskomponente umfasst, wobei die Verschlüsselungskomponente dafür ausgelegt ist, die Dienstanforderung zu verschlüsseln.

3. Registrier-/Entregistriersystem nach Anspruch 2, wobei der Dienstverwaltungsserver ferner eine Entschlüsselungskomponente umfasst, wobei die Entschlüsselungskomponente dafür ausgelegt ist, die verschlüsselte Dienstanforderung zu entschlüsseln.

4. Registrier-/Entregistriersystem nach Anspruch 1, wobei der Dienstverwaltungsserver ferner eine Authentifikationskomponente umfasst, wobei die Authentifikationskomponente dafür ausgelegt ist, die Dienstanforderung zu authentifizieren.

5. Registrier-/Entregistriersystem nach Anspruch 1, wobei das Client-Ende die mehreren Registrier-/Entregistrierdienstanforderungen für die mehreren Dienste auf der Basis vordefinierter Regeln an den mindestens einen Dienstregistrier-/-entregistrierserver abliefern kann.

6. Registrier-/Entregistrierverfahren zum Registrieren/Entregistrieren mehrerer Dienste auf einmal, mit den folgenden Schritten:
Abliefern (21) einer Dienstanforderung durch ein Client-Ende an einen Dienstverwaltungsserver bei einer vorbestimmten Gelegenheit;
Erhalten (24) von Informationen mehrerer Dienste, die einem Benutzer entsprechen, durch den Dienstverwaltungsserver auf der Basis der Dienstanforderung und Senden einer die Informationen der mehreren Dienste umfassenden Nachricht zu dem Client-Ende;
Erzeugen mehrerer Registrier-/Entregistrierdienstanforderungen für die mehreren Dienste durch das Client-Ende auf der Basis der Informationen der mehreren Dienste und Abliefern (25) der mehreren Registrier-/Entregistrierdienstanforderungen für die mehreren Dienste an mindestens einen Dienstregistrier-/-entregistrierserver; und
Registrieren/Entregistrieren (26) der mehreren Dienste durch den mindestens einen Dienstregistrier-/-entregistrierserver auf der Basis der mehreren Registrier-/Entregistrierdienstanforderungen für die mehreren Dienste.

7. Registrier-/Entregistrierverfahren nach Anspruch 6, ferner mit dem Schritt des Verschlüsselns der Dienstanforderung.

8. Registrier-/Entregistrierverfahren nach Anspruch 7, ferner mit dem Schritt des Entschlüsselns der verschlüsselten Dienstanforderung durch den Dienstverwaltungsserver.

9. Registrier-/Entregistrierverfahren nach Anspruch 6, ferner mit dem Schritt des Authentifizierens (22) der Dienstanforderung durch den Dienstverwaltungsserver.

10. Registrier-/Entregistrierverfahren nach Anspruch 6, wobei der Schritt des Ablieferns der mehreren Registrier-/Entregistrierdienstanforderungen für die mehreren Dienste an mindestens einem Dienstregistrier-/-entregistrierserver auf der Basis vordefinierter Regeln durch das Client-Ende ausgeführt wird.

11. Registrier-/Entregistrierverfahren nach Anspruch 10, wobei die vordefinierten Regeln zufälliges Registrieren/Entregistrieren oder auf Priorität basierendes Registrieren/Entregistrieren umfassen.

12. Client-Ende zum Registrieren/Entregistrieren mehrerer Dienste auf einmal, umfassend:
eine Komponente, die für Folgendes ausgelegt ist:
Abliefern einer Dienstanforderung an einen Dienstverwaltungsserver bei einer vorbestimmten Gelegenheit;
Empfangen einer Nachricht von dem Dienstverwaltungsserver, die Informationen mehrerer Dienste, die einem Benutzer entsprechen, umfasst;
Erzeugen mehrerer Registrier-/Entregistrierdienstanforderungen für die mehreren Dienste auf der Basis der von dem Dienstverwaltungsserver empfangenen Informationen der mehreren Dienste; und
Abliefern der mehreren Registrier-/Entregistrierdienstanforderungen für die mehreren Dienste an mindestens einen Dienstregistrier-/-entregistrierserver.

13. Client-Ende nach Anspruch 12, wobei die Komponente ferner dafür ausgelegt ist, die Dienstanforderung zu verschlüsseln.

14. Client-Ende nach Anspruch 12, wobei die Komponente ferner dafür ausgelegt ist, vordefinierte Regeln zu erhalten und die mehreren Registrier-/Entregistrierdienstanforderungen für die mehreren Dienste auf der Basis der vordefinierten Regeln an den mindestens einen Dienstregistrier-/-entregistrierserver abzuliefern.

## Revendications

1. Système d'inscription/annulation destiné à l'inscription à/annulation d'une pluralité de services en une fois, comprenant une extrémité client, un serveur de gestion de services et au moins un serveur d'inscription à/annulation d'un service où :
le serveur de gestion de services est capable de conserver en mémoire des informations utilisateur, qui comprennent des informations d'une pluralité de services, est capable d'extraire des informations de la pluralité de services correspondant à un utilisateur en fonction d'une demande de service fournie par l'extrémité client, et est capable d'envoyer un message à l'extrémité client contenant les informations de la pluralité de services,
l'extrémité client est capable de fournir une demande de service au serveur de gestion de services à une occasion prédéterminée, est capable de générer, en fonction du message contenant les informations de la pluralité de services reçu du serveur de gestion de services, une pluralité de demandes d'inscription à des/annulation de services pour la pluralité de services, et est capable de fournir la pluralité de demandes d'inscription à des/annulation de services pour la pluralité de services à l'au moins un serveur d'inscription à/annulation d'un service, et
l'au moins un serveur d'inscription à/annulation d'un service est capable d'inscrire à/annuler la pluralité de services en fonction de la pluralité de demandes d'inscription à des/annulation de services pour la pluralité de services.

2. Système d'inscription/annulation selon la revendication 1, où l'extrémité client comprend en outre une composante de chiffrement, la composante de chiffrement étant configurée de façon à chiffrer la demande de service.

3. Système d'inscription/annulation selon la revendication 2, où le serveur de gestion de services comprend en outre une composante de déchiffrement, la composante de déchiffrement étant configurée de façon à déchiffrer la demande de service chiffrée.

4. Système d'inscription/annulation selon la revendication 1, où le serveur de gestion de services comprend en outre une composante d'authentification, la composante d'authentification étant configurée de façon à authentifier la demande de service.

5. Système d'inscription/annulation selon la revendication 1, où l'extrémité client est capable de fournir la pluralité de demandes d'inscription à des/annulation de services pour la pluralité de services à l'au moins un serveur d'inscription à/annulation d'un service en fonction de règles prédéfinies.

6. Procédé d'inscription/annulation destiné à l'inscription à/annulation d'une pluralité de services en une fois, comprenant :
la fourniture (21), par une extrémité client, d'une demande de service à un serveur de gestion de services à une occasion prédéterminée,
l'obtention (24), par le serveur de gestion de services, d'informations d'une pluralité de services correspondant à un utilisateur en fonction de la demande de service et l'envoi d'un message contenant les informations de la pluralité de services à l'extrémité client,
la génération, par l'extrémité client, d'une pluralité de demandes d'inscription à des/annulation de services pour la pluralité de services en fonction des informations de la pluralité de services et la fourniture (25) de la pluralité de demandes d'inscription à des/annulation de services pour la pluralité de services à au moins un serveur d'inscription à/annulation d'un service, et
l'inscription à/annulation de (26), par l'au moins un serveur d'inscription à/annulation d'un service, la pluralité de services en fonction de la pluralité de demandes d'inscription à des/annulation de services pour la pluralité de services.

7. Procédé d'inscription/annulation selon la revendication 6, comprenant en outre un chiffrage de la demande de service.

8. Procédé d'inscription/annulation selon la revendication 7, comprenant en outre un déchiffrage de la demande de service chiffrée par le serveur de gestion de services.

9. Procédé d'inscription/annulation selon la revendication 6, comprenant en outre une authentification (22) de la demande de service par le serveur de gestion de services.

10. Procédé d'inscription/annulation selon la revendication 6, où l'opération de fourniture de la pluralité de demandes d'inscription à des/annulation de services pour la pluralité de services à au moins un serveur d'inscription à/annulation d'un service est exécutée en fonction de règles prédéfinies par l'extrémité client.

11. Procédé d'inscription/annulation selon la revendication 10, où les règles prédéfinies comprennent une inscription/annulation aléatoire ou une inscription/annulation basée sur des priorités.

12. Extrémité client destinée à l'inscription à/annulation d'une pluralité de services en une fois, comprenant :
une composante configurée de façon à :
fournir une demande de service à un serveur de gestion de services à une occasion prédéterminée,
recevoir un message du serveur de gestion de services contenant des informations d'une pluralité de services correspondant à un utilisateur,
générer, en fonction des informations de la pluralité de services reçues du serveur de gestion de services, une pluralité de demandes d'inscription à des/annulation de services pour la pluralité de services, et
fournir la pluralité de demandes d'inscription à des/annulation de services pour la pluralité de services à au moins un serveur d'inscription à/annulation d'un service.

13. Extrémité client selon la revendication 12, où la composante est configurée en outre de façon à chiffrer la demande de service.

14. Extrémité client selon la revendication 12, où la composante est configurée en outre de façon à obtenir des règles prédéfinies et à fournir la pluralité de demandes d'inscription à des/annulation de services pour la pluralité de services à l'au moins un serveur d'inscription à/annulation d'un service en fonction des règles prédéfinies.
